# EUROPÄISCHE PATENTANMELDUNG

(11) **EP 1 353 424 A1**
(43) Veröffentlichungstag der Anmeldung: **15.10.2003**
(21) Anmeldenummer: 02405292.0
(22) Anmeldetag: 12.04.2002
(51) Int. Cl.: H02B 1/24, H02H 7/28, H02J 3/00

(54) **Schaltanlage zur Verteilung elektrischer Energie**

(71) Anmelder: ABB RESEARCH LTD., 8050 Zürich (CH)
(72) Erfinder: Niemeyer, Lutz, 5242 Birr (CH)
(74) Vertreter: ABB Patent Attorneys

(57) **Zusammenfassung**

Die Grundeinheit (1) einer Schaltanlage weist eine Ringsammelschiene (2), vier über jeweils einen Trenner (3, 4, 5, 6) an die Sammelschiene (2) angeschlossene Abgänge (7, 8, 9, 10) sowie zwei Kommutierungsschaltelemente (11, 12) und zwei Abschaltelemente (13, 14), die in der Sammelschiene (2) angeordnet und im Normalbetrieb geschlossen sind, auf. Jeder Abgang (7, 8, 9, 10) ist über ein Kommutierungsschaltelement (11, 12) mit dem einen der benachbarten Abgänge und über ein Abschaltelement (13, 14) mit dem andern der benachbarten Abgänge verbunden. Zur Grundeinheit (1) gehört weiter ein drittes, im Normalbetrieb geschlossenes Kommutierungsschaltelement (15), das sowohl zum ersten Kommutierungsschaltelement (11) wie auch zum zweiten Kommutierungsschaltelement (12) in Serie geschaltet ist. Jedes Abschaltelement (13, 14) ist somit durch einen Parallelstrompfad bestehend aus der Serieschaltung jeweils zweier Kommutierungsschaltelemente (11, 15; 12, 15) überbrückt. Die Kommutierungsschaltelemente (11, 12, 15) sind für die Führung des Nennstromes und kurzzeitig eines Fehlerstromes, jedoch nicht für ein Abschalten von Fehlerströmen ausgelegt. Demgegenüber sind die Abschaltelemente (13, 14) für eine Fehlerstromunterbrechung, jedoch nicht für die Führung des Nennstromes ausgelegt.

## Beschreibung

### Technisches Gebiet

Die Erfindung betrifft eine Schaltanlage zur Verteilung elektrischer Energie gemäss Oberbegriff des Anspruches 1 sowie ein Verfahren zum Betreiben dieser Schaltanlage.

### Stand der Technik

Bei den herkömmlichen Schaltanlagen mit einer Ringsammelschiene und mehreren Abgängen sind in der Sammelschiene zwischen jeweils zwei benachbarten Abgängen Leistungsschalter, die im Normalbetrieb geschlossen sind, angeordnet. Jeder dieser Leistungsschalter ist sowohl für die Stromunterbrechung wie auch für die Nennstromführung ausgelegt, was eine entsprechend aufwändige Ausgestaltung des Kontaktsystems erforderlich macht. Die Leistungsschalter (je einer pro Abgang) werden jedoch sehr selten, meist nur im Falle eines Fehlers, betätigt, machen aber einen hohen Anteil der Kosten der Gesamtanlage aus.

### Darstellung der Erfindung

Der vorliegenden Erfindung liegt die Aufgabe zu Grunde, eine Schaltanlage der eingangs genannten Art zu schaffen, die mit kostengünstigeren Komponenten auskommt als die herkömmlichen Schaltanlagen mit Ringsammelschiene.

Diese Aufgabe wird erfindungsgemäss mit einer Schaltanlage mit den Merkmalen des Anspruches 1 gelöst.

Bei der erfindungsgemässen Schaltanlage übernehmen die Kommutierungsschaltelemente die Führung des Nennstromes. Somit sind die Abschaltelemente, die zur Unterbrechung von Fehlerströmen dienen, von der Nennstromführung entlastet. Dies erlaubt es, als Abschaltelement ein im Vergleich zu einem Leistungsschalter kostengünstigeres Gerät einzusetzen. Die Kommutierungsschaltelemente müssen ausser zur Nennstromführung nur zur kurzzeitigen Führung von Fehlerströmen, nicht aber für deren Abschaltung, ausgelegt sein. Das Kontaktsystem eines Kommutierungsschaltelementes kann somit konstruktiv einfacher ausgestaltet sein als dasjenige eines Leistungsschalters. Das alles wirkt sich günstig auf die Anlagekosten aus.

Die erfindungsgemässe Schaltanlage wird nach dem Verfahren gemäss Anspruch 9 betrieben.

Bevorzugte Weiterausgestaltungen des Erfindungsgegenstandes sind in den abhängigen Ansprüchen umschrieben.

### Kurze Beschreibung der Zeichnungen

Im folgenden wird die Erfindung anhand von Figuren, welche lediglich Ausführungsbeispiele darstellen, näher erläutert.

Es zeigen:
- Fig. 1: die Grundeinheit einer ersten Ausführungsform einer Schaltanlage,
- Fig. 2: eine erste Ausbauvariante der Schaltanlage gemäss Fig. 1,
- Fig.3: eine zweite Ausbauvariante der Schaltanlage gemäss Fig. 1,
- Fig. 4: die Grundeinheit einer zweiten Ausführungsform einer Schaltanlage, und
- Fig. 5: eine Ausbauvariante der Schaltanlage gemäss Fig. 4.

### Wege zur Ausführung der Erfindung

Zuerst wird auf die konstruktive Ausgestaltung der Abschaltelemente und der Kommutierungsschaltelemente eingegangen, die Teile der in den Figuren dargestellten erfindungsgemässen Schaltanlagen bilden.

Ein Abschaltelement ist für die Stromunterbrechung, nicht aber für das Führen des Nennstromes ausgebildet und weist ein Schaltkontaktsystem auf, über das im Normalbetrieb nur ein kleiner Strom fliesst. Dieses Schaltkontaktsystem kann dem Leistungsschaltkontaktsystem eines herkömmlichen Leistungsschalters entsprechen. Als Abschaltelement kann aber auch ein Schnellschalter, eine Strombegrenzungseinrichtung, eine Halbleiterschaltvorrichtung, ein Supraleiter mit in Serie geschaltetem Lasttrenner, eine Sicherung oder ein wiedereinschaltbares Sicherungselement eingesetzt werden.

Ein Kommutierungsschaltelement ist für die Führung des Nennstromes sowie kurzzeitig eines Fehlerstromes, nicht aber für die Unterbrechung dieses Fehlerstromes ausgelegt und ist so konstruiert, dass beim Oeffnen ein Kommutieren des Stromes auf einen Strompfad, in den ein Abschaltelement geschaltet ist, bewirkt wird. Bei den Kommutierungsschaltelementen, deren Kontaktsystem ähnlich aufgebaut ist wie das Nennstromkontaktsystem eines herkömmlichen Leistungsschalters, ist konstruktiv dafür gesorgt, dass beim Oeffnen eine genügend hohe Bogenspannung aufgebaut wird, damit der Strom innerhalb der nötigen Schaltzeit auf den vorstehend erwähnten andern Strompfad kommutiert wird. Ein Beispiel einer geeigneten konstruktiven Ausbildung des Kontaktsystems eines derartigen Kommutierungsschaltelementes ist in der US-A-4,371,765 gezeigt.

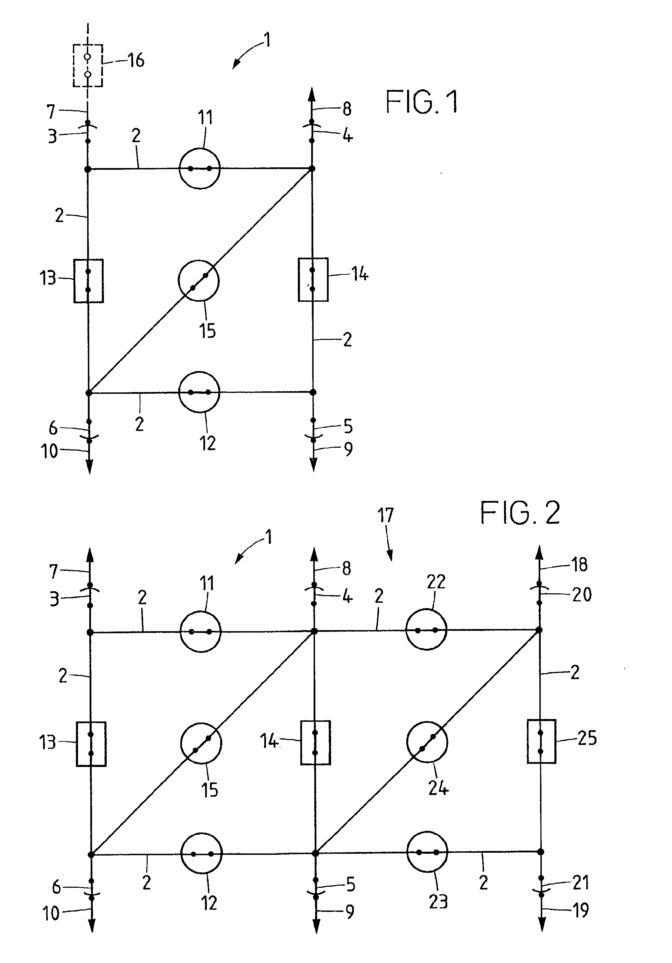

In der Fig. 1 ist die Grundeinheit 1 einer ersten Ausführungsform einer erfindungsgemässen Schaltanlage dargestellt, die eine Ringsammelschiene 2, vier über jeweils einen Trenner 3, 4, 5, bzw. 6 an die Sammelschiene 2 angeschlossene Abgänge 7, 8, 9, 10 sowie zwei Kommutierungsschaltelemente 11, 12 und zwei Abschaltelemente 13, 14, die in der Sammelschiene 2 angeordnet und im Normalbetrieb geschlossen sind, aufweist. Das Kommutierungsschaltelement 11 verbindet die Abgänge 7 und 8, die ihrerseits über die Abschaltelemente 13 bzw. 14 mit den Abgängen 10 bzw. 9 verbunden sind. Das Kommutierungsschaltelement 12 verbindet die Abgänge 9 und 10 miteinander. Somit ist jeder Abgang 7, 8, 9, 10 über ein Kommutierungsschaltelement 11 bzw. 12 mit dem einen der benachbarten Abgänge und über ein Abschaltelement 13 bzw. 14 mit dem andern der benachbarten Abgänge verbunden. Zur Grundeinheit 1 gehört weiter ein drittes, im Normalbetrieb geschlossenes Kommutierungsschaltelement 15, das sowohl zum ersten Kommutierungsschaltelement 11 wie auch zum zweiten Kommutierungsschaltelement 12 in Serie geschaltet ist. Somit ist das Abschaltelement 13 durch einen ersten Parallelstrompfad bestehend aus der Reihenschaltung der Kommutierungsschaltelemente 11 und 15 und das Abschaltelement 14 durch einen zweiten Parallelstrompfad bestehend aus der Reihenschaltung der Kommutierungsschaltelemente 12 und 15 überbrückt.

In der Fig. 1 ist mit gestrichelten Linien ein nicht mehr zur Grundeinheit 1 gehörender Leistungsschalter 16 dargestellt, der am andern Ende des Abganges 7 angeordnet ist und Teil einer anderen Schaltanlage bildet.

Im Normalbetrieb, bei dem alle Kommutierungsschaltelemente 11, 12, 15 und beide Abschaltelemente 13, 14 geschlossen sind, übernehmen die Kommutierungsschaltelemente 11, 12, 15 die Stromführung und sorgen für eine Verbindung zwischen allen Abgängen 7, 8, 9, 10.

Tritt beispielsweise am Abgang 8 ein Fehler auf, so öffnen zuerst die angrenzenden Kommutierungsschaltelemente 11 und 15. Der Fehlerstrom wird nun auf einen andern, das Abschaltelemente 14 aufweisenden Strompfad kommutiert. Der in diesem Strompfad fliessende Fehlerstrom wird durch das Abschaltelement 14 unterbrochen. Die Abgänge 7, 9 und 10 bleiben untereinander verbunden. Sollte gleichzeitig zusätzlich noch ein weiterer Fehler in einem der anderen Abgänge 7, 9, 10, beispielsweise im Abgang 7 auftreten, so unterbrechen das Abschaltelement 13 und der Leistungsschalter 16 am anderen Ende des Abganges 7 den Fehlerstrom.

Bei einem Fehler in einem der andern Abgänge 7, 9 oder 10 erfolgt die Fehlerstromabschaltung auf eine entsprechende Art und Weise.

In der Fig. 2 ist eine erste Ausbauvariante der Schaltanlage gemäss Fig. 1 dargestellt, bei der die in der Fig. 1 gezeigte Grundeinheit 1 durch einen Anlagenblock 17 erweitert ist. In den Fig. 1 und 2 werden für die Komponenten der Grundeinheit 1 dieselben Bezugszeichen verwendet.

Zum Anlagenblock 17 gehören zwei Abgänge 18 und 19, die je über einen Trenner 20 bzw. 21 an die Ringsammelschiene 2 angeschlossen sind. Der Anlagenblock 17 weist ferner drei Kommutierungsschaltelemente 22, 23, 24 sowie ein Abschaltelement 25 auf. Die Kommutierungsschaltelemente 22 und 23 sind in der Sammelschiene 2 angeordnet und verbinden jeweils einen der Abgänge 18 bzw. 19 des Anlagenblockes 17 mit dem benachbarten Abgang 8 bzw. 9 der Grundeinheit 1. Das ebenfalls in der Sammelschiene 2 angeordnete Abschaltelement 25 verbindet die beiden Abgänge 18 und 19 des Anlagenblockes 17. Das dritte Kommutierungsschaltelement 24 des Anlagenblockes 17 ist sowohl mit dem Kommutierungsschaltelement 22 wie auch mit dem Kommutierungsschaltelement 23 in Serie geschaltet. Die beiden in Reihe geschalteten Kommutierungsschaltelemente 23 und 24 bilden einen Parallelstrompfad, der das Abschaltelement 25 überbrückt.

Im Normalbetrieb sind alle Kommutierungsschaltelemente 11, 12, 15, 22, 23, 24 und alle Abschaltelemente 13, 14, 25 der Grundeinheit 1 und des Anlagenblockes 17 geschlossen. Somit übernehmen die Kommutierungsschaltelemente 11, 12, 15, 22, 23 und 24 die Stromführung und sorgen für eine Verbindung zwischen allen Abgängen 7, 8, 9, 10, 18, 19.

Falls in einem der Abgänge 7, 10, 18 oder 19 ein Fehler auftritt, so wird wie anhand der Fig. 1 beschrieben durch Oeffnen der entsprechenden angrenzenden Kommutierungsschaltelemente 11, 12, 15, 22, 23 bzw. 24 dafür gesorgt, dass der Fehlerstrom auf einen Strompfad kommutiert wird, in den das Abschaltelement 13 bzw. 25 geschaltet ist. Dann wird der Fehlerstrom durch Oeffnen des entsprechenden Abschaltelementes 13 bzw. 25 unterbrochen.

Tritt ein Fehler im Abgang 8 auf, so werden zuerst die angrenzenden Kommutierungsschaltelemente 11, 15, 22 geöffnet. Als Folge davon wird der Fehlerstrom auf einen das Abschaltelement 14 enthaltenden Strompfad kommutiert. Anschliessend wird dieses Abschaltelement 14 geöffnet und damit der Fehlerstrom unterbrochen. Bei einem Fehler im Abgang 9 ist der Vorgang zum Abschalten des Fehlerstromes entsprechend.

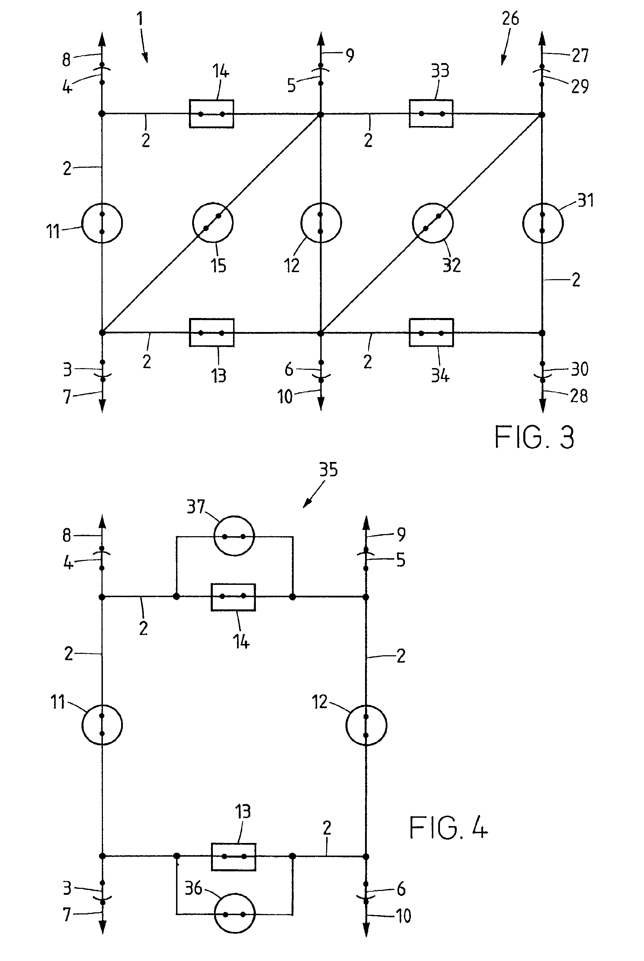

Eine zweite Ausbauvariante der Schaltanlage gemäss Fig. 1 ist in der Fig. 3 dargestellt. Bei dieser zweiten Ausbauvariante ist die in der Fig. 1 gezeigte Grundeinheit 1 durch einen Anlagenblock 26 erweitert. In den Fig. 1 und 3 werden für die Komponenten der Grundeinheit 1 dieselben Bezugszeichen verwendet.

Der Anlagenblock 26, der ähnlich aufgebaut ist wie der Anlagenblock 17 der ersten Ausbauvariante, weist auch zwei Abgänge 27 und 28 auf, von denen jeder über einen Trenner 29 bzw. 30 an die Ringsammelschiene 2 angeschlossen ist. Zum Anlagenblock 26 gehören ferner zwei Kommutierungsschaltelemente 31, 32 sowie zwei Abschaltelemente 33, 34. Die Abschaltelemente 33, 34 sind in der Sammelschiene 2 angeordnet und verbinden jeweils einen der Abgänge 27 bzw. 28 des Anlagenblockes 26 mit dem benachbarten Abgang 9 bzw. 10 der Grundeinheit 1. Das ebenfalls in der Sammelschiene 2 angeordnete Kommutierungsschaltelement 31 verbindet die beiden Abgänge 27 und 28 des Anlagenblockes 26. Das zweite Kommutierungsschaltelement 32 des Anlagenblockes 26 ist sowohl mit dem andern Kommutierungsschaltelement 31 des Anlagenblockes 26 wie auch mit dem Kommutierungsschaltelement 12 der Grundeinheit 1 in Serie geschaltet. Die beiden in Reihe geschalteten Kommutierungsschaltelemente 31, 32 bilden einen ersten Parallelstrompfad, der das Abschaltelement 34 überbrückt. Das andere Abschaltelement 33 des Anlagenblockes 26 ist durch einen zweiten Parallelstrompfad überbrückt, der durch die Serieschaltung der Kommutierungsschaltelemente 32 und 12 gebildet ist.

Im Normalbetrieb sind alle Kommutierungsschaltelemente 11, 12, 15, 31, 32 und alle Abschaltelemente 13, 14, 33, 34 der Grundeinheit 1 und des Anlagenblockes 26 geschlossen. Somit übernehmen die Kommutierungsschaltelemente 11, 12, 15, 31, 32 die Stromführung und sorgen für eine Verbindung zwischen allen Abgängen 7, 8, 9, 10, 27, 28.

Falls in einem der Abgänge 7, 8, 27 oder 28 ein Fehler auftritt, so wird wie anhand der Fig. 1 beschrieben durch Oeffnen der entsprechenden angrenzenden Kommutierungsschaltelemente 11, 15, 31 bzw. 32 dafür gesorgt, dass der Fehlerstrom auf einen Strompfad kommutiert wird, in den eines der Abschaltelemente 13, 14, 33 bzw. 34 geschaltet ist. Dann wird der Fehlerstrom durch Oeffnen des entsprechenden Abschaltelementes 13, 14, 33 bzw. 34 unterbrochen.

Sollte ein Fehler im Abgang 9 auftreten, so werden zuerst die angrenzenden Kommutierungsschaltelemente 12 und 15 geöffnet. Als Folge davon wird der Fehlerstrom auf die, die Abschaltelemente 14 bzw. 33 enthaltenden Strompfade kommutiert. Dann werden diese Abschaltelemente 14 und 33 geöffnet und damit der Fehlerstrom unterbrochen. Bei einem Fehler im Abgang 10 ist der Vorgang zum Abschalten des Fehlerstromes entsprechend (Oeffnen zuerst der angrenzenden Kommutierungsschaltelemente 12 und 32, dann der Abschaltelemente 13 und 34).

In der Fig. 4 ist die Grundeinheit 35 einer zweiten Ausführungsform einer erfindungsgemässen Schaltanlage dargestellt. Diese Grundeinheit 35 ist zum Teil gleich aufgebaut wie die in der Fig. 1 gezeigte Grundeinheit 1. Sich entsprechende Komponenten sind deshalb in den Fig. 1 und 4 mit denselben Bezugszeichen bezeichnet. Die Grundeinheit 35 umfasst ebenfalls eine Ringsammelschiene 2, vier über jeweils einen Trenner 3, 4, 5 bzw. 6 an die Sammelschiene 2 angeschlossene Abgänge 7, 8, 9, 10 sowie zwei Kommutierungsschaltelemente 11, 12 und zwei Abschaltelemente 13, 14, die in der Sammelschiene 2 angeordnet und im Normalbetrieb geschlossen sind. Das Kommutierungsschaltelement 11 verbindet die Abgänge 7 und 8, die ihrerseits über die Abschaltelemente 13 bzw. 14 mit den Abgängen 10 bzw. 9 verbunden sind. Das Kommutierungsschaltelement 12 verbindet die Abgänge 9 und 10 miteinander. Somit ist jeder Abgang 7, 8, 9, 10 über ein Kommutierungsschaltelement 11 bzw. 12 mit dem einen der benachbarten Abgänge und über ein Abschaltelement 13 bzw. 14 mit dem andern der benachbarten Abgänge verbunden. Zur Grundeinheit 1 gehören zudem zwei weitere Kommutierungsschaltelemente 36 und 37. Jedes dieser weiteren Kommutierungsschaltelemente 36, 37 ist zu einem der beiden Abschaltelemente 13 bzw. 14 parallel geschaltet und bildet demzufolge einen Parallelstrompfad, der das zugeordnete Abschaltelement 13 bzw. 14 überbrückt.

Im Normalbetrieb sind alle Kommutierungsschaltelemente 11, 12, 36, 37 und beide Abschaltelemente 13, 14 geschlossen. Die Kommutierungsschaltelemente 11, 12, 36, 37 übernehmen die Stromführung und sorgen für eine Verbindung zwischen allen Abgängen 7, 8, 9, 10. Die Abschaltelemente 13, 14 führen keinen Nennstrom.

Tritt am Abgang 8 ein Fehler auf, so öffnen zuerst die Kommutierungsschaltelemente 11 und 37, die an die Fehlerstelle angrenzen. Der Fehlerstrom wird nun auf einen das Abschaltelement 14 aufweisenden Strompfad kommutiert. Der in diesem Strompfad fliessende Fehlerstrom wird durch das Abschaltelement 14 unterbrochen. Die Abgänge 7, 9 und 10 bleiben untereinander verbunden. Bei einem Fehler in einem der andern Abgänge 7, 9 oder 10 erfolgt die Fehlerstromabschaltung entsprechend.

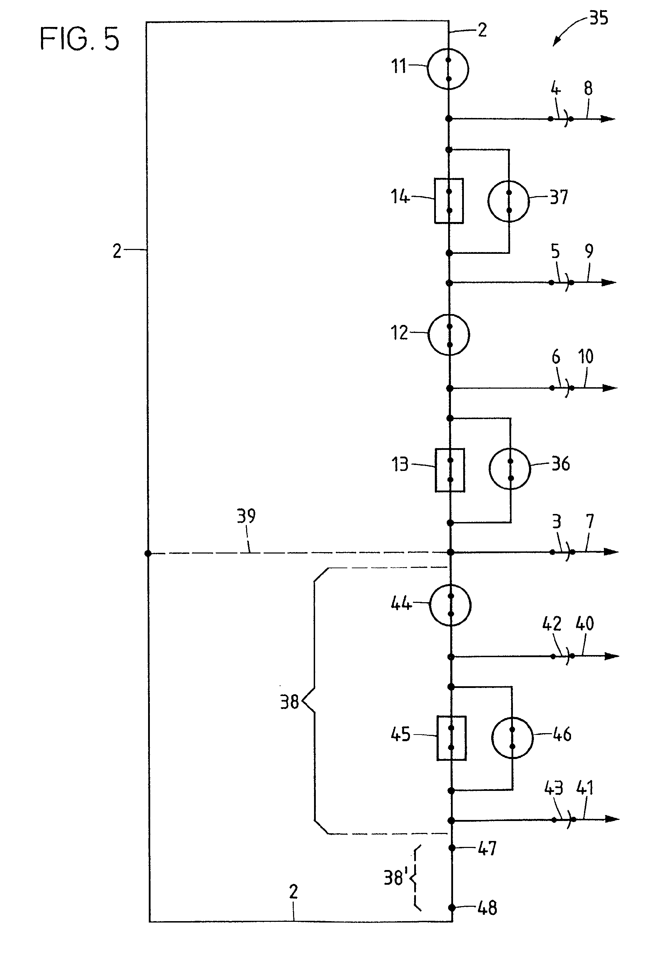

In der Fig. 5 ist eine Ausbauvariante der Schaltanlage gemäss Fig. 4 dargestellt, bei der die in der Fig. 4 gezeigte Grundeinheit 35 durch einen Anlagenblock 38 erweitert ist. In den Fig. 4 und 5 werden für die Komponenten der Grundeinheit 35 dieselben Bezugszeichen verwendet. Durch die gestrichelte Abgrenzungslinie 39 soll die Abgrenzung der Grundeinheit 35 gegenüber dem Anlagenblock 38 angedeutet werden.

Zum Anlagenblock 38 gehören zwei Abgänge 40 und 41, die je über einen Trenner 42 bzw. 43 an die Ringsammelschiene 2 angeschlossen sind. Der Anlagenblock 38 weist ferner ein Kommutierungsschaltelement 44 sowie ein Abschaltelement 45 auf. Das Kommutierungsschaltelement 44 ist in der Sammelschiene 2 angeordnet und verbindet den Abgang 40 des Anlagenblockes 38 mit dem benachbarten Abgang 7 der Grundeinheit 35. Das ebenfalls in der Sammelschiene 2 angeordnete Abschaltelement 45 verbindet die beiden Abgänge 40, 41 des Anlagenblockes 38. Der Abgang 41 ist über die Sammelschiene 2 mit dem Kommutierungsschaltelement 11 der Grundeinheit 35 verbunden. Der Anlagenblock 38 umfasst zudem ein weiteres Kommutierungsschaltelement 46, das zum Abschaltelement 45 parallel geschaltet ist und einen Parallelstromkreis bildet, der das Abschaltelement 45 überbrückt.

Im Normalbetrieb sind alle Kommutierungsschaltelemente 11, 12, 36, 37, 44, 46 und alle Abschaltelemente 13, 14, 45 der Grundeinheit 35 und des Anlagenblockes 38 geschlossen. Die Kommutierungsschaltelemente 11, 12, 36, 37, 44, 46 übernehmen die Stromführung und sorgen für eine Verbindung zwischen allen Abgängen 7, 8, 9, 10, 40, 41. Die Abschaltelemente 13, 14, 45 sind von der Nennstromführung entlastet.

Bei einem Fehler in einem der Abgänge 7, 8, 9, 10, 40, 41 werden gleich wie anhand der Fig. 4 beschrieben zuerst die an die Fehlerstelle angrenzenden Kommutierungsschaltelemente geöffnet, über die der fehlerbehaftete Abgang mit den beiden benachbarten Abgängen in Verbindung steht, d. h. beispielsweise im Falle eines Fehlers im Abgang 40 die Kommutierungsschaltelemente 44 und 46. Der Fehlerstrom fliesst nun über dasjenige Abschaltelement, das den fehlerbehafteten Abgang mit einem benachbarten Abgang verbindet, d. h. in unserem Beispiel über das Abschaltelement 45. Dadurch wird der Fehlerstrom unterbrochen. Die nicht von einem Fehler betroffenen Abgänge, d. h. in unserem Beispiel die Abgänge 7, 8, 9, 10 und 41, bleiben untereinander verbunden.

Die in Fig. 5 gezeigte Schaltanlage kann durch weitere Anlagenblöcke erweitert werden, die gleich aufgebaut sind wie der Anlagenblock 38. Mit 38' ist ein solcher weiterer Anlagenblock angedeutet, der zwischen die Anschlusspunkte 47 und 48 in die Ringsammelschiene 2 eingebaut werden kann.

Sowohl bei der nur aus einer Grundeinheit 35 bestehenden Schaltanlage gemäss Fig. 4 wie auch bei der erweiterten Schaltanlage gemäss Fig. 5 werden im Falle eines Fehlers in einem Abgang die an diesen angrenzenden Kommutierungsschaltelemente geöffnet, so dass der Fehlerbereich nur noch über ein benachbartes Abschaltelement mit dem Rest der Schaltanlage verbunden ist. Zur Unterbrechung des Fehlerstromes wird dann dieses Abschaltelement geöffnet.

Wie beschrieben wird bei den in den Fig. 4 und 5 gezeigten Schaltanlagen bei einem Fehler immer zuerst das parallel zu einem Abschaltelement geschaltete Kommutierungsschaltelement und erst danach dieses Abschaltelement geöffnet. Dies erlaubt es, für ein Abschaltelement und das zugeordnete Kommutierungsschaltelement einen gemeinsamen Antrieb zu verwenden. Die aus der Parallelschaltung eines Abschaltelementes mit einem Kommutierungsschaltelement bestehende Einheit kann durch einen herkömmlichen Leistungsschalter gebildet werden. Das macht es möglich, eine bestehende Schaltanlage mit Ringsammelschiene durch Einbauen von zusätzlichen Kommutierungsschaltelementen zwischen jeweils zwei Leistungsschalter um zusätzliche Abgänge zu erweitern. Auf diese Weise kann die Anzahl der Abgänge maximal verdoppelt werden.

Bei allen erfindungsgemässen Schaltanlagen muss eine gerade Anzahl von Abgängen, jedoch mindestens deren vier, vorhanden sein.

### Bezugszeichenliste

- 1: Grundeinheit
- 2: Ringsammelschiene
- 3, 4, 5, 6: Trenner
- 7, 8, 9, 10: Abgang
- 11, 12,: Kommutierungsschaltelement
- 13, 14: Abschaltelement
- 15: Kommutierungsschaltelement
- 16: Leistungsschaltgerät
- 17: Anlagenblock
- 18, 19: Abgang
- 20, 21: Trenner
- 22, 23, 24: Kommutierungsschaltelement
- 25: Abschaltelement
- 26: Anlagenblock
- 27, 28: Abgang
- 29, 30: Trenner
- 31, 32: Kommutierungsschaltelement
- 33, 34: Abschaltelement
- 35: Grundeinheit
- 36, 37: Kommutierungsschaltelement
- 38, 38': Anlagenblock
- 39: Abgrenzungslinie
- 40, 41: Abgang
- 42, 43: Trenner
- 44: Kommutierungsschaltelement
- 45: Abschaltelement
- 46: Kommutierungsschaltelement
- 47, 48: Anschlusspunkt

## Patentansprüche

1. Schaltanlage zur Verteilung elektrischer Energie mit einer Ringsammelschiene (2), mehreren über Trenner (3, 4, 5, 6) an die Sammelschiene (2) anschliessbaren Abgängen (7, 8, 9, 10) und zwischen jeweils zwei Abgängen (7, 8, 9, 10) in der Sammelschiene (2) angeordneten, im Normalbetrieb geschlossenen Schaltelementen (11, 12, 13, 14), **gekennzeichnet durch** eine vier Abgänge (7, 8, 9, 10) umfassende Grundeinheit (1, 35), bei der in der Sammelschiene (2) zwei im Normalbetrieb geschlossene Kommutierungsschaltelemente (11, 12), die für die Führung des Nennstromes und kurzzeitig eines Fehlerstromes, jedoch nicht für ein Abschalten von Fehlerströmen ausgelegt sind, und zwei im Normalbetrieb geschlossene Abschaltelemente (13, 14), die für eine Fehlerstromunterbrechung, jedoch nicht für die Führung des Nennstromes ausgelegt sind, derart angeordnet sind, dass jeder Abgang mit dem einen, ersten der benachbarten Abgänge über ein Kommutierungsschaltelement (11, 12) und mit dem andern, zweiten der benachbarten Abgänge über ein Abschaltelement (13, 14) verbunden ist und bei der jedes Abschaltelement (13, 14) **durch** einen Parallelstrompfad überbrückt ist, der ein drittes, im Normalbetrieb geschlossenes Kommutierungsschaltelement (15, 36, 37), das ebenfalls für die Führung des Nennstromes und kurzzeitig eines Fehlerstromes, jedoch nicht für ein Abschalten von Fehlerströmen ausgelegt ist, aufweist.

2. Schaltanlage nach Anspruch 1, **dadurch gekennzeichnet, dass** ein beiden Parallelstrompfaden gemeinsames drittes Kommutierungsschaltelement (15) vorgesehen ist, das sowohl mit dem einen wie auch mit dem andern der beiden in der Sammelschiene (2) angeordneten Kommutierungsschaltelemente (11, 12) in Serie geschaltet ist und mit jedem dieser Kommutierungsschaltelemente (11, 12) einen der Parallelstrompfade bildet. (Fig. 1)

3. Schaltanlage nach Anspruch 1, **dadurch gekennzeichnet, dass** in jedem Parallelstrompfad das dritte Kommutierungsschaltelement (36, 37) zum zugeordneten Abschaltelement (13, 14) parallel geschaltet ist. (Fig. 4)

4. Schaltanlage nach Anspruch 2, **dadurch gekennzeichnet, dass** die Grundeinheit (1) erweitert ist durch wenigstens einen Anlagenblock (17), der zwei weitere, über Trenner (20, 21) an die Sammelschiene (2) anschliessbare Abgänge (18, 19), zwei weitere in der Sammelschiene (2) angeordnete, jeweils einen der weiteren Abgänge (18, 19) mit einem benachbarten Abgang (8, 9) der Grundeinheit (1) verbindende Kommutierungsschaltelemente (22, 23), ein weiteres, zwischen den beiden weiteren Abgängen (18, 19) in der Sammelschiene (2) angeordnetes Abschaltelement (25), sowie ein drittes weiteres Kommutierungsschaltelement (24) umfasst, das sowohl mit dem einen wie auch mit dem andern der zwei weiteren Kommutierungsschaltelemente (22, 23) in Serie geschaltet ist und mit einem dieser zwei weiteren Kommutierungsschaltelemente (22, 23) einen das weitere Abschaltelement (25) überbrückenden Parallelstrompfad bildet. (Fig. 2)

5. Schaltanlage nach Anspruch 2, **dadurch gekennzeichnet, dass** die Grundeinheit (1) erweitert ist durch wenigstens einen Anlagenblock (26), der zwei weitere, über Trenner (29, 30) an die Sammelschiene (2) anschliessbare Abgänge (27, 28), zwei weitere in der Sammelschiene (2) angeordnete, jeweils einen der weiteren Abgänge (27, 28) mit einem benachbarten Abgang (9, 10) der Grundeinheit (1) verbindende Abschaltelemente (33, 34), ein erstes weiteres, zwischen den beiden weiteren Abgängen (27, 28) in der Sammelschiene (2) angeordnetes Kommutierungsschaltelement (31), sowie ein zweites weiteres Kommutierungsschaltelement (32) umfasst, das sowohl mit dem ersten weiteren Kommutierungsschaltelement (31) wie auch mit einem Kommutierungsschaltelement (12) der Grundeinheit (1) in Serie geschaltet ist und mit jedem dieser Kommutierungsschaltelemente (12, 31) jeweils einen, eines der weiteren Abschaltelemente (33, 34) überbrückenden Parallelstrompfad bildet. (Fig. 3)

6. Schaltanlage nach Anspruch 3, **dadurch gekennzeichnet, dass** die Grundeinheit (35) erweitert ist durch wenigstens einen Anlagenblock (38), der zwei weitere, über Trenner (42, 43) an die Sammelschiene (2) anschliessbare Abgänge (40,41), von denen der eine, erste Abgang (41) mit einem der in der Sammelschiene (2) angeordneten Kommutierungsschaltelement (11) der Grundeinheit (35) verbunden ist, ein in der Sammelschiene (2) angeordnetes, den anderen, zweiten ((40) der weiteren Abgänge (40, 41) mit einem benachbarten Abgang (7) der Grundeinheit (35) verbindendes, erstes weiteres Kommutierungsschaltelement (44), ein weiteres, zwischen den beiden weiteren Abgängen (40, 41) in der Sammelschiene (2) angeordnetes Abschaltelement (45), sowie einen das weitere Abschaltelement (45) überbrückenden Parallelstrompfad umfasst, der ein zum weiteren Abschaltelement (45) parallel geschaltetes, zweites weiteres Kommutierungsschaltelement (46) aufweist. (Fig. 5)

7. Schaltanlage nach Anspruch 3 oder Anspruch 6, **dadurch gekennzeichnet, dass** die Einheit bestehend aus einem Abschaltelement (13, 14, 45) und parallel geschaltetem Kommutierungsschaltelement (36, 37, 46) durch einen Leistungsschalter gebildet ist.

8. Schaltanlage nach Anspruch 3 oder Anspruch 6, **dadurch gekennzeichnet, dass** für ein Abschaltelement (13, 14, 45) und das zu diesem parallel geschaltete Kommutierungsschaltelement (36, 37, 46) ein gemeinsamer Antrieb vorgesehen ist.

9. Verfahren zum Betrieb der Schaltanlage nach Anspruch 1, **dadurch gekennzeichnet, dass** im Falle eines Fehlers in einem Abgang zuerst die an die Fehlerstelle angrenzenden Kommutierungsschaltelemente geöffnet werden, wodurch ein Kommutieren des Stromes auf einen Strompfad, in den ein zur Fehlerstelle benachbartes Abschaltelement geschaltet ist, bewirkt wird und dass dann das Abschaltelement in diesem Strompfad geöffnet wird.
